# EUROPEAN PATENT APPLICATION

(11) **EP 2 819 069 A1**
(43) Date of publication of application: **31.12.2014**
(21) Application number: 12869053.4
(22) Date of filing: 06.12.2012
(51) Int. Cl.: G06Q 10/00, G06Q 30/02, G06Q 50/10, H04Q 9/00

(54) **ELECTRONIC APPARATUS**

(30) Priority: 22.02.2012 JP 2012036786
(71) Applicant: Nikon Corporation, Tokyo 100-8331 (JP)
(72) Inventor: TOMII, Hiromi, Tokyo 100-8331 (JP); YAMAMOTO, Sayako, Tokyo 100-8331 (JP); MATSUMURA, Mitsuko, Tokyo 100-8331 (JP); SAMEJIMA, Saeko, Tokyo 100-8331 (JP); NAKAMURA, Yae, Tokyo 100-8331 (JP); SEKIGUCHI, Masakazu, Tokyo 100-8331 (JP)
(74) Representative: Hoffmann Eitle
(86) International application number: PCT/JP2012/081615
(87) International publication number: WO 2013/125128

(57) **Abstract**

In order to acquire suitable information related to an apparatus, an electronic apparatus has a first acquisition unit (70) that acquires usage status of a first apparatus (10) that belongs to a given category, and a second acquisition unit (72) that acquires information about a second apparatus that belongs to the given category and is different from the first apparatus on the basis of the usage status of the first apparatus acquired by the first acquisition unit.

## Description

### TECHNICAL FIELD

The present invention relates to electronic apparatuses.

### BACKGROUND ART

Conventionally, it is proposed to carry out prediction of performance deterioration and failure prediction of electronic apparatuses such as home electric appliances (see Patent Document 1).

### PRIOR ART DOCUMENTS

### PATENT DOCUMENTS

Patent Document 1: Japanese Laid-open Patent Publication No. 2004-70699

### SUMMARY OF THE INVENTION

### PROBLEMS TO BE SOLVED BY THE INVENTION

However, the home electric appliances must be replaced in the future, and in many cases, replaced appliances are urgently purchased when errors occur. In these cases, the purchasers frequently purchase home electric appliances with insufficient information about the home electric appliances.

The present invention has been made in view of the above problem, and aims to provide an electronic apparatus capable of acquiring appropriate information about apparatuses.

### MEANS FOR SOLVING THE PROBLEMS

An electronic apparatus of the present invention has a first acquisition unit that acquires usage status of a first apparatus that belongs to a given category, and a second acquisition unit that acquires information about a second apparatus that belongs to the given category and is different from the first apparatus on the basis of the usage status of the first apparatus acquired by the first acquisition unit.

In this case, the first acquisition unit may acquire, as the usage status of the first apparatus, information about a place in which the first apparatus is installed. The first acquisition unit may acquire, as the usage status of the first apparatus, information about a size of a place in which the first apparatus is installed. The first acquisition unit may acquire, as the usage status of the first apparatus, information about the amount of heating in the place in which the first apparatus is installed.

In the electronic apparatus of the present invention, the first acquisition unit may acquire, as the usage status of the first apparatus, information about the frequency of use of the first apparatus. The first acquisition unit may acquire a specification of the first apparatus.

In the electronic apparatus of the present invention, the second acquisition unit may acquire a specification of the second apparatus. The second acquisition unit may acquire word-of-mouth information about the second apparatus. A control unit that controls a timing of acquiring information about the second apparatus by the second acquisition unit may further be provided. In this case, the control unit may control the timing on the basis of a physical change of the first apparatus.

In the electronic apparatus of the present invention, a display unit that displays the information about the second apparatus acquired by the second acquisition unit may be provided. The electronic apparatus may be built in the first apparatus.

In the electronic apparatus of the present invention, the first acquisition unit may acquire a time zone in which the first apparatus is used as the usage status of the first apparatus. A third acquisition unit that acquires a change of a lifestyle of a user may further be provided. A communication unit that transmits the information acquired by the second acquisition unit to an external apparatus may further be provided.

### EFFECTS OF THE INVENTION

According to the present invention, it is possible to provide an electronic apparatus capable of acquiring appropriate information about apparatuses.

### BRIEF DESCRIPTION OF DRAWINGS

FIG. 1 is a diagram of a structure of an apparatus information providing system in accordance with a first embodiment;
FIG. 2(a) is a block diagram of an air-conditioner in FIG. 1, and FIG. 2(b) is a front view of the air-conditioner;
FIG. 3 is a diagram of a hardware structure of a control unit in FIG. 2(a);
FIG. 4 is a block diagram of functions of the control unit in FIG. 2(a);
FIG. 5 is a diagram of a usage history DB;
FIG. 6(a) is a diagram of a room DB, and FIG. 6(b) is a diagram of an apparatus DB;
FIG. 7 is a flowchart of a series of processing of the control unit;
FIG. 8 is a flowchart of a concrete process of step S 14 in FIG. 7;
FIG. 9 is a block diagram of a structure of an apparatus information providing system in accordance with a second embodiment;
FIG. 10 is a diagram of a washing machine;
FIG. 11 is a block diagram of functions of a control unit in FIG. 9;
FIG. 12(a) is a diagram of a usage history DB in FIG. 11, FIG. 12(b) is a dirt removal DB in FIG. 11, and FIG. 12(c) is a diagram of an apparatus DB in FIG. 11;
FIG. 13 is a block diagram of a structure of an apparatus information providing system in accordance with a third embodiment;
FIG. 14 is a block diagram of a structure of an apparatus information providing system in accordance with a fourth embodiment; and
FIG. 15 is a block diagram of a structure of an apparatus information providing system in accordance with a variation.

### MODES FOR CARRYING OUT THE INVENTION

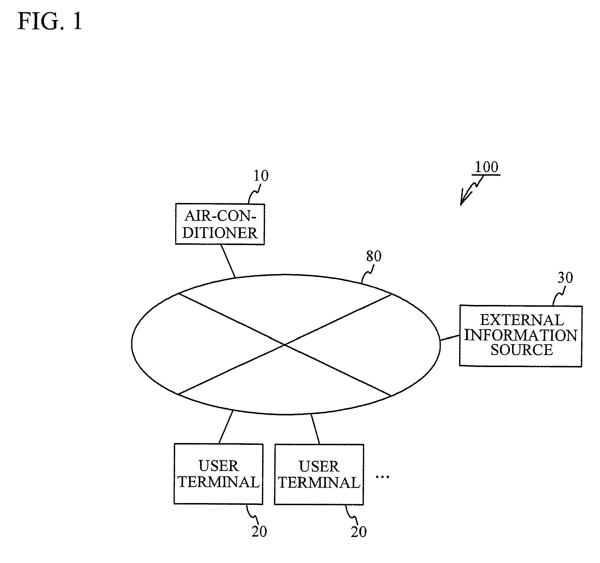

(First Embodiment) Now, a detailed description is given of a first embodiment in conjunction with FIGs. 1 to 8. In FIG. 1, there is illustrated a structure of an apparatus information providing system 100 of a first embodiment in the form of a block diagram. The apparatus information providing system 100 is a system for notifying a person who uses an air-conditioner 10 of the time for replacement of the air-conditioner 10 and information about a new product that is to be considered in the replacement.

As illustrated in FIG. 1, the apparatus information providing system 100 is equipped with the air-conditioner 10, user terminals 20 and an external information source 30. The air-conditioner 10, the user terminals 20 and the external information source 30 are connected to a network 80 such as the Internet.

The air-conditioner 10 is an apparatus installed in the home (such as a living room), and has air-conditioning functions such as heating, cooling and dehumidifying. The detailed structure of the air-conditioner 10 will be described later.

The user terminals 20 are terminals such as portable phones, PCs (Personal Computers), smartphones and tablet terminals. The user terminals 20 are configured to have a function of displaying information (such as information about replacement) sent from the air-conditioner 10.

For example, the external information source 30 may be a server that stores information about the mass marketers who sell the air-conditioners, a server of a company that produces the air-conditioners, or a server that operates a blog. From the external information source 30, provided are information about the models of the air-conditioners (model number, useful life, durability time, dimensions, functions and so on), and word-of-mouth information.

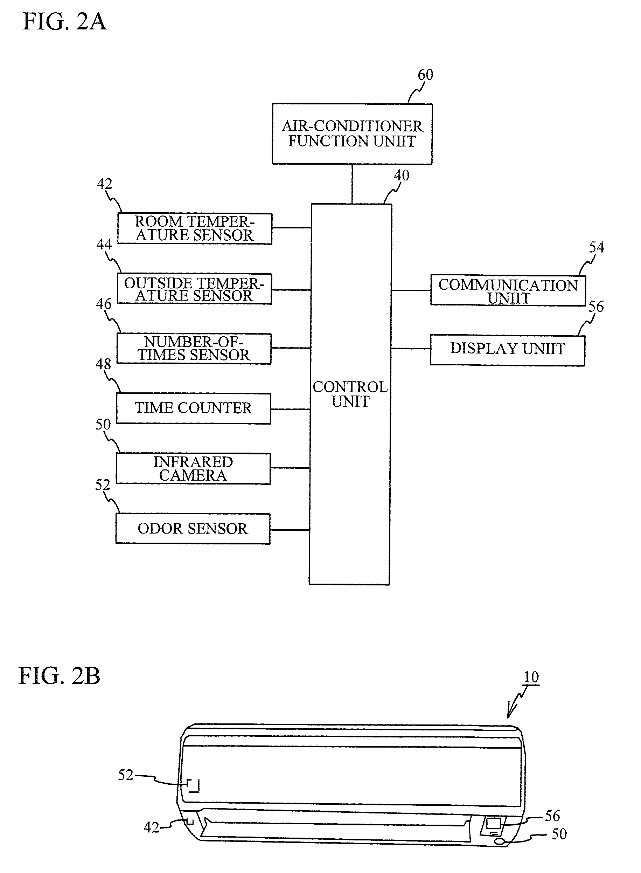

A detailed description is now given of the air-conditioner 10. There is illustrated a block diagram of the air-conditioner 10 in FIG. 2(a), and there is illustrated a status of the air-conditioner 10 viewed from the front side thereof in FIG. 2(b).

As illustrated in FIG. 2(a), the air-conditioner 10 has an air-conditioning function unit 60, a room temperature sensor 42, an outside temperature sensor 44, a number-of-times counter 46, a time counter 48, an infrared camera 50, an odor sensor 52, a communication unit 54, a display unit 56 and a control unit 40.

The air-conditioning function unit 60 realizes functions that the air-conditioners generally have (heating, cooling, dehumidifying and so on) under instructions of the control unit 40. For example, the air-conditioning function unit 60 sends warm air or cool air to the room so that the room temperature is regulated at a temperature set by the user. Further, the air-conditioning function unit 60 performs dehumidifying so that the humidity in the room is regulated at a humidity set by the user.

As illustrated in FIG. 2(b), the room temperature sensor 42 is, for example, a sensor that is provided inside or outside of the air-conditioner 10 and measures the temperature in the room. In a case where the air-conditioning function unit 60 has a function similar to that of the room temperature sensor 42, the temperature in the room may be measured by the above function of the air-conditioning function unit 60 without providing the room temperature sensor 42. The outside temperature sensor 44 is, for example, a sensor that is provided in an outdoor unit and measures the outside temperature.

The number-of-times counter 46 counts the number of times of operation of the air-conditioner 10 after shipment from the factory. The time counter 48 measures the time until the air-conditioner is turned off after being turned on and the time until the room temperature reaches the set temperature.

As illustrated in FIG. 2(b), the infrared camera 50 is attached in proximity to an outlet of the air-conditioner 10. The infrared camera 50 captures images in the room in which the air-conditioner 10 is installed. A temperature distribution in the room is available from the images captured by the infrared camera 50.

The odor sensor 52 is installed in proximity to a filter of the air conditioner 10, as illustrated in FIG. 2(b). The odor sensor 52 may be a sensor of a high-sensitivity indium oxide-based hot wire type sintered semiconductor type. The odor sensor 52 is capable of measuring the degree of odor (odor level) in the range of 0 (no odor) to 2000 (strong odor), for example. The arrangement of the odor sensor 52 in proximity to the filter makes it possible to detect an odor level that corresponds to the multiplied state of fungus on the filter.

The communication unit 54 sends and receives information to and from the user terminals 20 and the external information source 30 through the network 80.

The display unit 56 includes a liquid crystal panel, an organic EL display or the like, and displays the operation status of the air-conditioning function unit 60 and various messages about replacement.

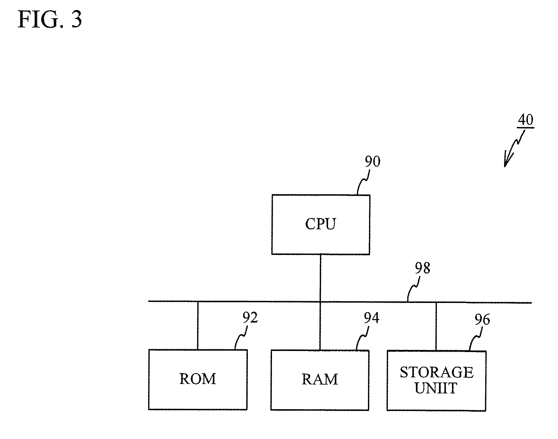

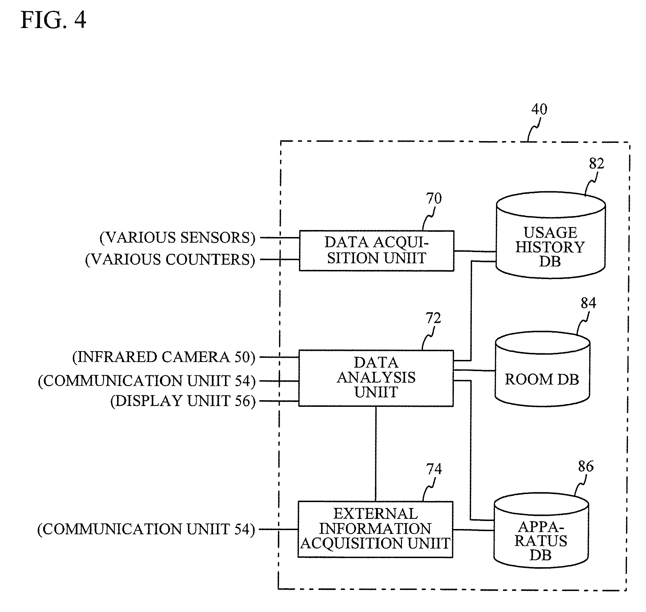

The control unit 40 controls various units of the air-conditioner 10 in an integrated way. As illustrated in FIG. 3, the control unit 40 is equipped with a CPU 90, a ROM 92, a RAM 94, a storage unit 96 (here HDD (Hard Disk Drive), flash memory, or the like). The structural units of the control unit 40 are connected to a bus 98. In the control unit 40, the CPU 90 executes a program to realize functions as a data acquisition unit 70, a data analysis unit 72 and an external information acquisition unit 74. In FIG. 4, various DBs (databases) stored in the storage unit 96 are illustrated.

The data acquisition unit 70 acquires data from the various sensors 42, 44 and 52 and the various counters 46 and 48 provided in the air-conditioner 10, and registers the data in a usage history DB 82.

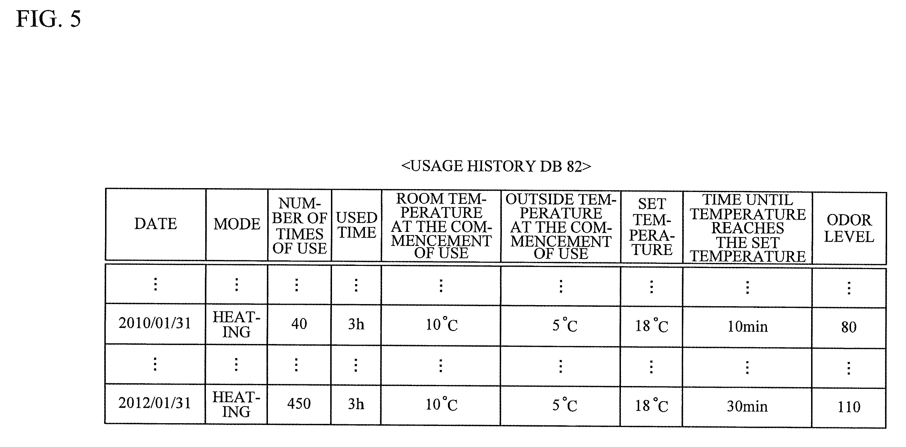

The usage history DB 82 is configured to have an exemplary data structure as illustrated in FIG. 5. More specifically, the usage history DB 82 has fields of date, mode, the number of times of use, used time, room temperature at the commencement of use, outside temperature at the commencement of use, set temperature, time until reaching the set temperature, and odor level. In the filed of date, the date of use of the air-conditioner 10 is written. In the field of mode, an operation mode such as heating, cooling and dehumidifying is written. In the field of the number of times of use, written is the number of times of operation of the air-conditioner 10 (the value counted by the number-of-times counter 46) after shipment from the factory. In the field of used time, the time until the operation of the air-conditioner 10 is ended after being started (a value measured by the time counter 48) is written. In the field of room temperature at the commencement of use, written is the room temperature at a time when the air-conditioner 10 starts operating (a value measured by the room temperature sensor 42). In the field of the outside temperature at the commencement of use, written is the outside temperature at a time when the air-conditioner 10 starts operating (a value measured by the outside temperature sensor 44). In the field of set temperature, the set temperature that is set in the air-conditioner 10 (set by the user) is written. In the field of time until reaching the set temperature, the time it took for the temperature to reach the set temperature after the operation starts (a value counted by the time counter 48) is written. In the field of odor level, an odor level in proximity to the filter of the air-conditioner 10 (a value measured by the odor sensor 52) is written.

Turning back to FIG. 4, the data analysis unit 72 analyzes the data in the usage history DB 82 and the images captured by the infrared camera 50, and thus creates the room DB 84. Further, the data analysis unit 72 analyzes the data in the usage history DB 82 and the data in the apparatus DB 86, and determines whether it is time for replacement of the air-conditioner 10. Furthermore, the data analysis unit 72 analyzes information acquired by the external information acquisition unit 74, the usage history DB 82 and the room DB 84, and selects a product suitable for the user (recommended product) from among new products. When the data analysis unit 72 determines that it is time for replacement or selects a recommended product, the data analysis unit 72 displays this information on the display unit 56 and sends the information to the corresponding user terminal 20 through the communication unit 54.

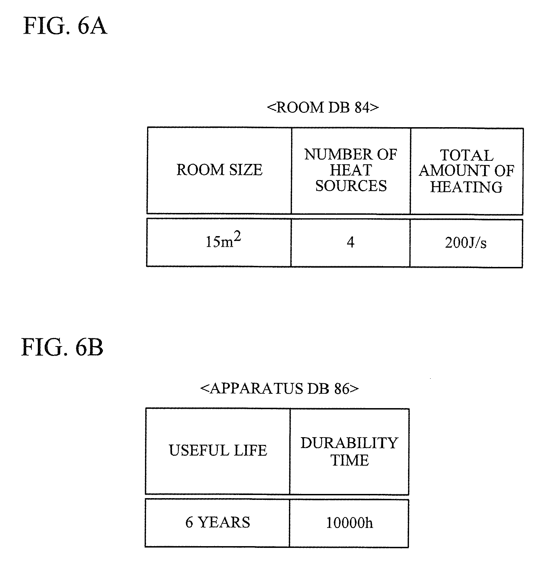

As illustrated in FIG. 6(a), the room DB 84 has fields of the room size, the number of heat sources, and the total amount of heating. In the field of the room size, there is written an approximately room size (area) estimated by the data analysis unit 72 by using the time needed until the temperature reaches the set temperature at the time of installing the air-conditioner 10 or another timing and the capability of the air-conditioner 10. A volume may be written as the the room size. In the field of the number of heating sources, written is the number of heat sources (objects at a given temperature or higher) detected by the data analysis unit 72 on the basis of the images captured by the infrared camera 50. In the field of the total amount of heating, written is the total amount of heating of the heating sources calculated by the data analysis unit 72 on the basis of the temperatures of the respective heating sources. The fields of the number of heating sources and the total amount of heating are updated every given time (for example, every month). The room DB 84 may be updated as often as approximately equal to once per month, for example, because the lifestyle of the users change due to the frequency of opening and closing the door of the room, a change of the heating sources (a case where the amount of heating decreases because of replacement of electric products such as personal computers and television sets, a case where the amount of heating increases due to an increasing number of family members resulting from marriage or delivery), and the seasons, even when the room size is constant.

The external information acquisition unit 74 acquires information on the air-conditioner 10 (catalogue values) from the external information source 30 and stores the information in the apparatus DB 86. The external information acquisition unit 74 acquires information on an air-conditioner (new model) sold from the external information source 30 and sends the information to the data analysis unit 72.

As illustrated in FIG. 6(b), the apparatus DB 86 has fields of useful life and durability time. If information to be written in these fields does not exist in the external information source 30, the fields are empty (no information). Factory default values of the useful life and durability time may be written in the apparatus DB 86.

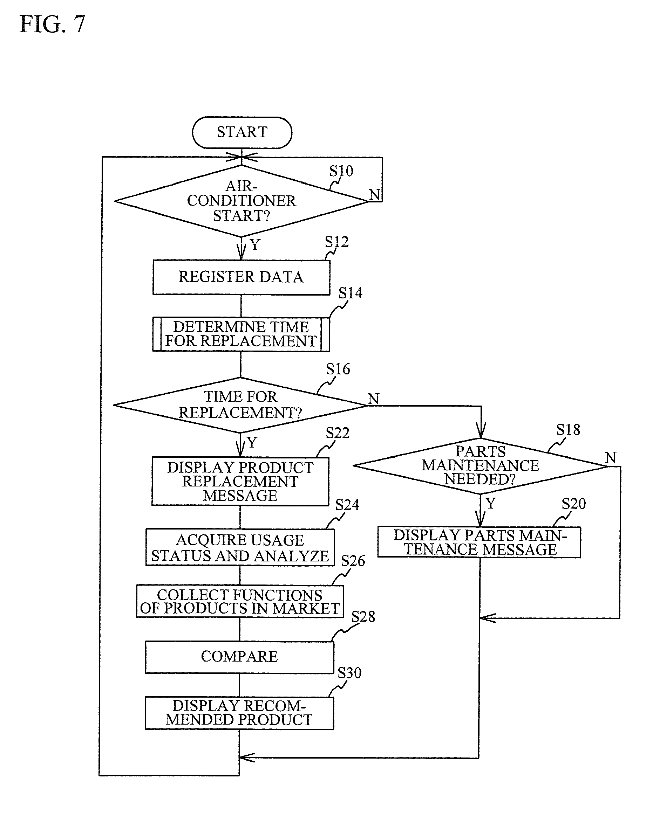

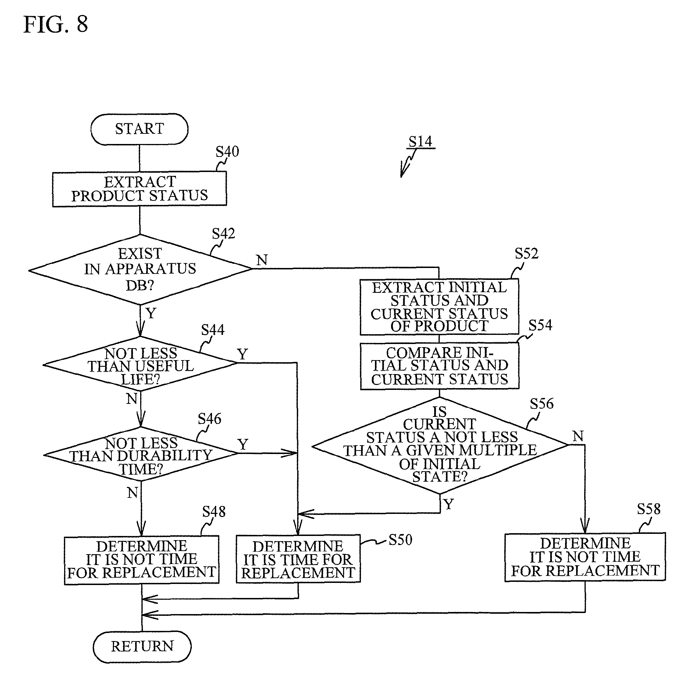

Now, a description is given of a series of processing of the control unit 40 while referring to flowcharts of FIGs. 7 and 8. FIG. 8 is a flowchart of a concrete process of step S 14 in the flowchart of FIG. 7.

In the processing in FIG. 7, in step S10, the data acquisition unit 70 waits until the air-conditioner 10 starts operating. That is, the data acquisition unit 70 proceeds to step S12 when the operation of the air-conditioning function unit 60 is started.

When proceeding to step S12, the data acquisition unit 70 appropriately acquires data from the various sensors 42, 44 and 52 and the various counters 46 and 48, and registers the data in the usage history DB 82. The data acquisition unit 70 acquires and register data so that one row (record) of the usage history DB 82 is fully filled with data until the operation of the air-conditioner 10 ends after starting.

Then, in step S14, the data analysis unit 72 executes a subroutine of determining the time for replacement. In this subroutine of determining the time for replacement, the data analysis unit 72 executes the process in accordance with the flowchart of FIG. 8.

In the process of FIG. 8, in step S40, the data analysis unit 72 commences to extract the product status of the air-conditioner 10 from the usage history DB 82. For example, the data analysis unit 72 extracts all data of the usage history DB 82 in FIG. 5.

In step S42, the data analysis unit 72 determines whether data (at least one of the useful life and the durability time) is available in the apparatus DB 86. If the determination in this step is made in the affirmative, the data analysis unit 72 proceeds to step S44.

When proceeding to step S44, the data analysis unit 72 determines whether the operating time of the air-conditioner 10 is not less than the useful life in the apparatus DB 86. If the corresponding data is not available in the apparatus DB 86 (if data of only the durability time is available), it is assumed that the determination in step S44 is made in the negative. The operating time of the air-conditioner 10 may be obtained from the difference between the date of data stored in the lowermost row of the usage history DB 82 and that in the uppermost row thereof.

If an affirmative determination is made in step S44, the data analysis unit 72 proceeds to step S50 and determines that it is time for replacement. In contrast, if a negative determination is made in step S44, the data analysis unit 72 proceeds to step S46.

The data analysis unit 72 proceeds to step S46, and determines whether the total time of use of the air-conditioner 10 is not less than the durability time in the apparatus DB 86. If no data of the durability time is available in the apparatus DB 86 (in a case where data of only the useful life exists), it is assumed that a negative determination is made in step S46. The total time of use of the air-conditioner 10 may be obtained by summarizing the used times of all the data in the usage history DB 82.

If an affirmative determination is made in step S46, the data analysis unit 72 proceeds to step S50 and determines that it is time for replacement. In contrast, if a negative determination is made in step S46, the data analysis unit 72 proceeds to step S48, and determines that it is not time for replacement. That is, the data analysis unit 72 determines that it is time for replacement if the air-conditioner 10 exceeds at least one of the useful life (catalog value) and the durability time (catalog value), and determines that it is not time for replacement if the air-conditioner 10 exceeds neither of them. As described above, after performing either step S48 or step S50, the data analysis unit 72 ends all the process of FIG. 8 and shifts to step S16 in FIG. 7.

In contrast, if a negative determination is made at step S42, that is, if there are no data of the useful life and the durability time in the apparatus DB 86, the data analysis unit 72 proceeds to step S52.

When proceeding to step S52, the data analysis unit 72 extracts the initial status and the current status of the product. In this case, data in the uppermost row of the usage history DB 82 and data in the lowermost row thereof are extracted. Then, in step S54, the data analysis unit 72 compares the initial status (data in the uppermost row) and the current status (data in the lowermost row) with each other. In this processing, the data analysis unit 72 compares the times until the temperature reaches the set temperature in the initial status and the current status with each other.

Then, in step S56, the data analysis unit 72 determines whether the current status is not less than a given multiple of the initial status (for example, 5 times). If this determination is made in the affirmative, that is, if the time until the temperature reaches the setting temperature in the initial status is 5 minutes and the time until the temperature reaches the setting temperature in the current status is 30 minutes, the current status is consequently greater than 5 times, and the data analysis unit 72 proceeds to step S50 and determines that it is time for replacement. In contrast, if the determination of step S56 is made in the negative, the data analysis unit 72 proceeds to step S58 and determines it is not time for replacement. As described above, after either step S50 or step S58 is performed, the data analysis unit 72 ends all the process of FIG. 8, and shifts to step S16 in FIG. 7.

Turning back to FIG. 7, when proceeding to step S16, the data analysis unit 72 determines whether it is determined in step S 14 that it is time for replacement. If the determination in this step is in the negative, that is, in the case where the data analysis unit 72 passes through the step S48 or step S58 in FIG. 8, the data analysis unit 72 proceeds to step S18.

When proceeding to step S18, the data analysis unit 72 determines whether a maintenance of units is needed. In this case, for example, the data analysis unit 72 determines whether the filter should be cleaned based on whether the latest data of the odor level in the usage history DB 82 exceeds a given threshold value. As another way, the data analysis unit 72 determines whether the filter should be cleaned based on whether the latest data of the odor level is a given multiple of the initial data.

The data analysis unit 72 returns to step S10 if the determination in step S18 is made in the negative, and proceeds to step S20 if in the affirmative. In step S20, the data analysis unit 72 displays a message for maintenance of units on the display unit 56 (for example. "Please clean filter" or the like). In addition to or instead of the display on the display unit 56, the data analysis unit 72 may send the message for maintenance of units to the corresponding user terminal 20. It is thus possible for the user to confirm the message for maintenance of units on the screen of the corresponding user terminal 20. After performing step S20 is carried out as described above, the data analysis unit 72 returns to step S10. In a case where lamps corresponding to the respective units such as LEDs are used as the display unit 56 of the air-conditioner 56, the message for maintenance of units may be indicated by turning on or off the corresponding lamp.

In contrast, if the determination in step S16 is in the affirmative, the data analysis unit 72 proceeds to step S22 and displays a product replacement message on the display unit 56. In this case, for example, the data analysis unit 72 displays a product replacement message such that "Please replace with a new one" on the display unit 56. In addition to or instead of the display on the display unit 56, the data analysis unit 72 may send the product replacement message to the corresponding user terminal 20. It is thus possible for the user to confirm the product replacement message on the screen of the user terminal 20. In a case where product replacement lamps such as LEDs are used as the display unit 56 of the air-conditioner 56, the message for maintenance of units may be indicated by turning on or off the corresponding lamp.

In subsequent step S24, the data analysis unit 72 acquires and analyzes all data in the usage history DB 82 in order to know the usage status of the air-conditioner 10. In this case, the data analysis unit 72 may analyze which one of the cooling, heating and dehumidifying modes has been used most frequently. In a case where more detailed modes such as a high power mode and a gentle wind mode are recorded on the usage history DB 82, the data analysis unit 72 may analyze which one of the more detailed modes has been used most frequently.

In subsequent step S26, the data analysis unit 72 collects information about the functions of a product in the market (new product) through the external information acquisition unit 74. In this case, the data analysis unit 72 collects information about functions such as modes of the product in the market and the room size covered.

In subsequent step S28, the data analysis unit 72 compares the analysis results in step S24 and the collection results in step S26 with each other. In this case, the data analysis unit 72 identifies a product having improved performance in the mode having a high operation frequency through the comparison. The determination as to whether the mode has been improved may be made by obtaining the specification (spec) of the air-conditioner 10 and the specification of the product in the market from the external information source 30 and comparing these data with each other. If it is determined that the performance has been improved, the data analysis unit 72 specifies the present product as a recommended product. In contrast, if there is no product having improved performance, the data analysis unit 72 specifies a successful model of the product currently used. The determination as to whether there is a successful model may be made by the degree of similarity of the model number. The data analysis unit 72 may specify, as the recommended product, a product having a higher specification than the current air-conditioner if it is determined that the product having a higher specification is better than the current air-conditioner on the basis of the room size, the number of heat sources and the total amount of heating registered in the room DB 84. In this case, if the latest data in the room DB 84 is given priority, product information that matches the latest lifestyle is thus available, whereby it is possible to support a situation such that the room size changes because of moving.

In subsequent step S30, the data analysis unit 72 performs a display of the recommended product on the display unit 56. In addition to or instead of the display on the display unit 56, the data analysis unit 72 may send the corresponding user terminal 20 the information about the recommended product. It is thus possible for the user to confirm the recommended product on the screen of the user terminal 20. For example, information carried out on the site when the manufacturer announced the new product may be displayed as the information about the recommended product. Also, word-of-mouth information about the recommended product obtained by a search using the model number in blog or twitter may be displayed. In this case, when the user refers to the word-of-mouth information, the user may specify the air conditioner purchased while taking comments of a person who actually uses the recommended product into consideration.

After performing step S30, the data analysis unit 72 returns to step S10. The process may be terminated temporality after step S30 is performed.

As described above in detail, according to the first embodiment, the data acquisition unit 70 acquires the usage status of the air-conditioner 10 (S12), and the data analysis unit 72 acquires information about an air-conditioner different from the air-conditioner 10 through the external information acquisition unit 74 (S26), whereby the data analysis unit 72 is capable of providing the user with information about the new air conditioner that corresponds to the user's usage status of the air conditioner 10. It is thus possible to provide the user with information about the air-conditioner suitable to the user on the basis of the usage status up to now even when sudden replacement is needed.

In the first embodiment, the data acquisition unit 70 acquires the size of the room in which the air-conditioner 10 is installed as the usage status of the air-conditioner 10, whereby the user can be provided with information about an air-conditioner suitable for the room size.

In the first embodiment, the data acquisition unit 70 acquires, as the usage status of the air-conditioner 10, the number of heat sources and the amount of heating in the place where the air-conditioner 10 is installed, whereby the user can be provided with information about a recommended product with heat generated in the room being considered.

In the first embodiment, the data acquisition unit 70 acquires the frequency of use of each mode of the air-conditioner 10 as the usage status thereof, whereby the user can be provided with information about a recommended product that corresponds to the intended use of the user.

In the first embodiment, the data analysis unit 72 determines the timing of acquisition of information about a new air-conditioner by referring to a physical change of the air-conditioner (performance deterioration of the air-conditioner) (S16), whereby the user can be timely provided with information about a recommended product.

In the first embodiment, information about a recommended product is displayed on the display unit 56 attached to the air-conditioner 10, whereby the user can be provided with information about the recommended product even if the user does not have any of the user terminals 20.

Though the first embodiment is configured to notify the user of information about a recommended product when the replacement time comes, the first embodiment is not limited to this but may be configured to notify the user of information about a recommended product when the recommended product has improved performance of the function that is frequently used.

The first embodiment may have a case where any of the sensors or the camera in FIG. 2A is not used to determine the replacement time and the recommended product. In this case, the sensor(s) or camera that is not used may be omitted from the air-conditioner.

The usage history DB 82 and the various sensors that the air-conditioner 10 has are merely examples. That is, another sensor may be used to acquire the usage history of the air-conditioner 10. For example, a humidity sensor, a vibration sensor or a noise sensor may be used to detect the status of the air-conditioner and the room.

According to the first embodiment described above, the air-conditioner 10, the user terminals 20 and the external information source 30 are connected to the same network 80. However, the first embodiment is not limited to the above. A network to which the air-conditioner 10 and the user terminals 20 are connected may be different from another network to which the air-conditioner 10 and the external information source 30 are connected. In this case, the air-conditioner 10 and the user terminals 20 may be interconnected in accordance with various connection standards such as wireless/wire LAN, USB, HDMI, and Bluetooth (registered trademark).

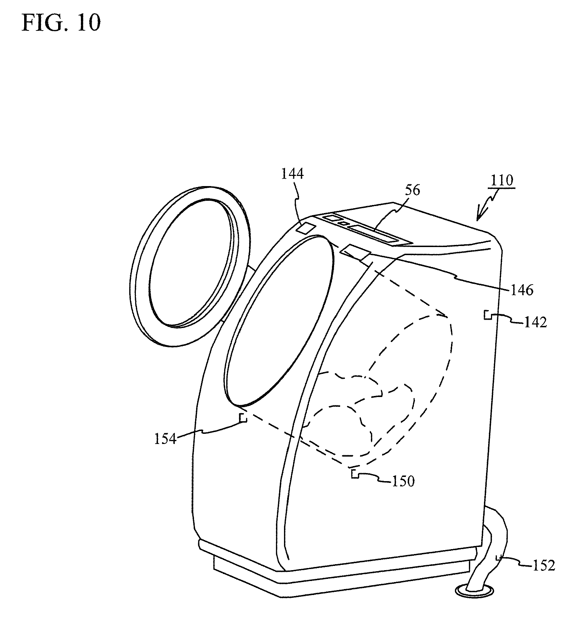

(Second Embodiment) Now, a description is given of a second embodiment. An apparatus information providing system of the second embodiment has a washing machine 110 (see FIG. 10) instead of the air-conditioner 10. The other structures in FIG. 1 are the same as those of the second embodiment.

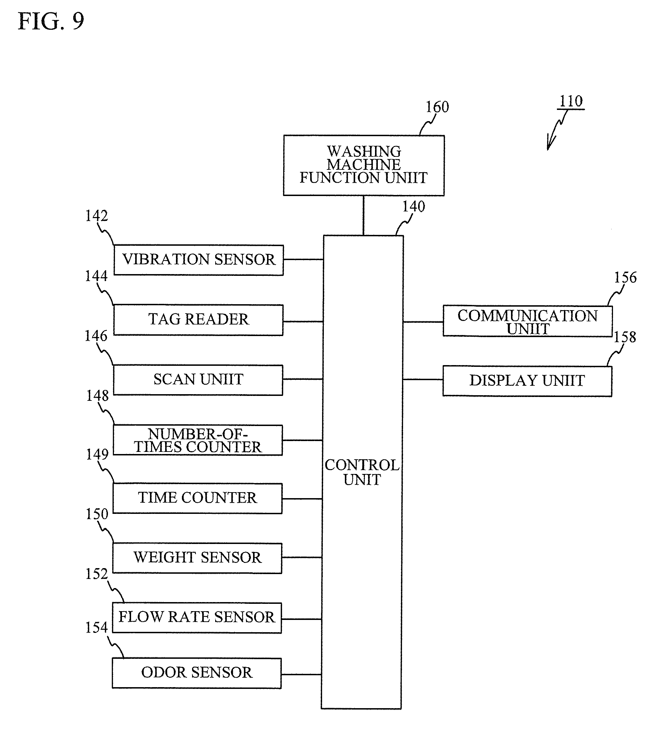

In FIG. 9, there is illustrated a block diagram of the washing machine 110. As illustrated in FIG. 9, the washing machine 110 is equipped with a washing machine function unit 160, a vibration sensor 142, a tag reader 144, a scan unit 146, a number-of-times counter 148, a time counter 149, a weight sensor 150, a flow rate sensor 152, an odor sensor 154, a communication unit 156, a display unit 158 and a control unit 140.

The washing machine function unit 160 realizes functions that the washing machines generally have (washing, drying, bacteria-elimination and so on) under instructions of the control unit 140.

As illustrated in FIG. 10, the vibration sensor 142 is attached to a part of the washing machine 110, and detects vibrations of the washing machine 110. A shock sensor or a strain gauge may be used as the vibration sensor.

As illustrated in FIG. 10, the tag reader 144 is attached on the front surface of the washing machine 110 in proximity to a washing tub. The tag reader 144 is a device that reads information about clothes to be washed from tags attached to the clothes. The tags may be a barcode, QR code (registered trademark) or an IC tag.

As illustrated in FIG. 10, the scan unit 146 is attached to the front surface of the washing machine 110 in proximity to the washing tub. The scan unit 146 has a camera that captures images of dirty portions of clothes. The scan unit 146 captures images of the dirty portions of clothes before washing and after selecting.

The number-of-times counter 148 counts the number of times of operation (use) of the washing machine 110 after shipment from the factory. The time counter 149 measures the time spent in one operation of the washing machine 110.

As illustrated in FIG. 10, the weight sensor 150 is attached in proximity to the washing tub, and detects the weight of clothing put in the washing tub. The flow rate sensor 152 is attached inside a drain hose, as illustrated in FIG. 10, and detects the amount of water used in one operation (washing or the like). Although the odor sensor 154 is most suitably provided in the washing tub, the odor sensor 154 is provided in a gap between an inner wall of the washing machine and an outer circumference of the washing tub in consideration of water leakage in the second embodiment. The odor sensor 154 is a sensor similar to the odor sensor 52 described in the first embodiment.

The communication unit 156 is similar to the communication unit 54 described in the first embodiment. The display unit 158 is attached to the upper surface of the washing machine 110 as illustrated in FIG. 10.

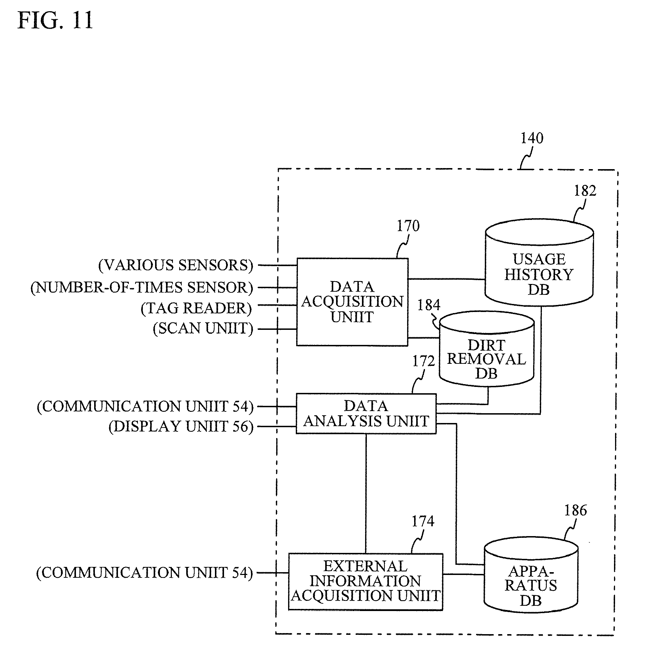

The control unit 140 controls various parts of the washing machine 110 in an integrated way. In FIG. 11, there is illustrated a function block diagram of the control unit 140. As illustrated in FIG. 11, the control unit 140 has functions as a data acquisition unit 170, a data analysis unit 172, and an external information acquisition unit 174. Further, the control unit 140 has a usage history DB 182, a dirt removal DB 184, and an apparatus DB 186.

The data acquisition unit 170 acquires data from the various sensors 142, 150, 152 and 154 attached to the washing machine 110 and data from the various counters 148 and 149, the tag reader 144, and the scan unit 146, and registers the data in the usage history DB 182 and the dirt removal DB 184.

The data analysis unit 172 analyzes the data in the usage history DB 182 and the dirt removal DB 184, and determines whether it is time for replacement of the washing machine 110. Further, the data analysis unit 172 analyzes the information acquired by the external information acquisition unit 174, the usage history DB 182 and the dirt removal DB 184, and selects a product suitable for the user (recommended product) from among new products. When the data analysis unit 172 determines that it is time for replacement or selects a recommended product, the data analysis unit 172 displays this information on the display unit 158 and sends the information to the corresponding user terminal 20 through the communication unit 156.

The external information acquisition unit 174 acquires information about the washing machine 110 (catalog value) from the external information source 30, and stores the information in the apparatus DB 186. The external information acquisition unit 174 acquires information about a new model, and sends the information to the data analysis unit 172.

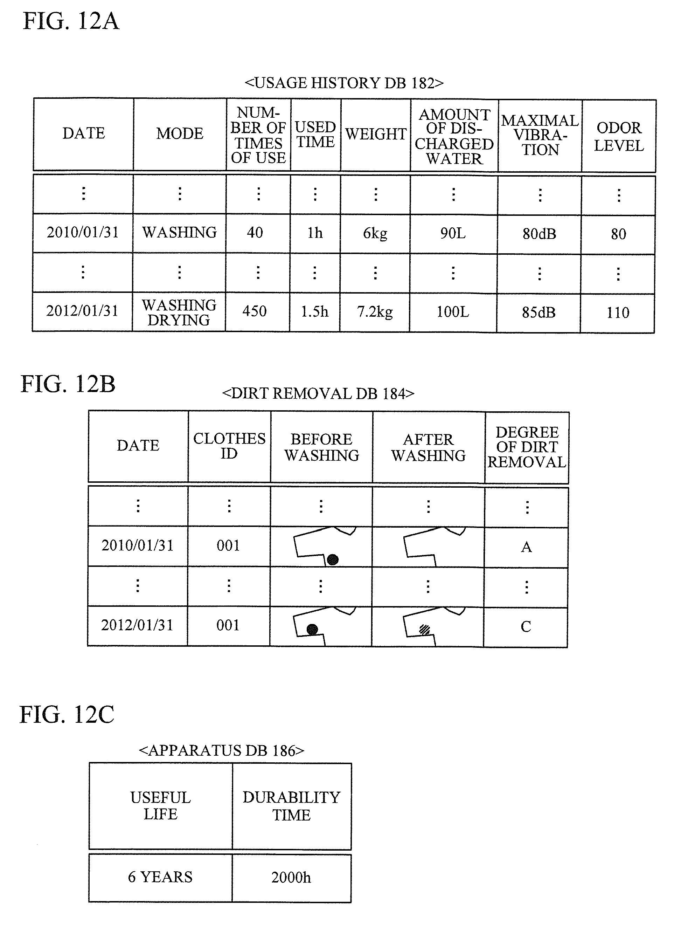

As illustrated in FIG. 12(a), the usage history DB 182 has fields of date, mode, number of times of use, used time, weight, amount of discharged water, maximal vibration and odor level. In the field of date, the date of use (washing) is written. The item of date may include information about the time zone in addition to information about the date of the week and the national holiday. In the field of mode, the mode actually used such as washing, washing and drying, drying and bacteria elimination is written. In the field of mode, individual setting (such as the number of times of washing, the number of times of rinsing, and a spin-drying time) may be written. In the field of the number of times of use, written is the number of times of use of the washing machine 110 after shipment of the factory. In the field of used time, the time spent in one use is written. In the field of weight, the weight of clothing washed or the like (detected by the weight sensor 150) is written. In the field of the amount of discharged water, the amount of discharged water (detected by the flow rate sensor 152) is written. In the field of maximal vibration, written is a detected value of the vibration sensor 142 when the maximal vibration occurs during use. The field of odor level, the odor level close to the washing tub (detected by the odor sensor 154) is written.

As illustrated in FIG. 12(b), the dirt removal DB 184 has fields of data, clothes ID, images before washing, images after washing, and degree of dirt removal. In the field of clothes ID, information read by the tag reader 144 is written. In the field of images before washing, an image captured by the scan unit 146 before washing (an image immediately after the tag reader 144 reads the clothes ID) is written. In the field of images after washing, an image captured by the scan unit 146 after washing (an image immediately after the tag reader 144 reads the clothes ID) is written. In the field of the degree of dirt removal, written is a rank of the degree of dirt removal (for example, 5 stages of A (good) ∼ E (poor) that is determined by the data analysis unit 172 by referring to the images before and after washing.

As illustrated in FIG. 12(c), the apparatus DB 186 has fields of useful life and durability time. This apparatus DB 186 is similar to the first embodiment. In the apparatus DB 186, a useful life and a durability time starting from the time of shipment may be written.

The control unit 140 of the second embodiment executes the processes in FIGs. 7 and 8. Now, a description is given of the process of the control unit 140 specifically focusing on a process different from that of the first embodiment.

Referring to FIG. 7, the washing machine is turned on (affirmative determination in step S10), and the data acquisition unit 170 performs a data registration in step S12. In washing, the user places the tag of dirty clothes in front of the tag reader 144, and causes a dirty portion of the clothes to be scanned (image capturing) by the scan unit 146. After washing is finished, the user places the tag of the clothes that was scanned before washing in front of the tag reader 144, and causes the previously dirty portion to be scanned (image capturing) by the scan unit 146. Thus, the data acquisition unit 170 acquires the clothes ID read by the tag reader 144 and the images captured by the scan unit 146 while the user is doing the actions, and stores them in the dirt removal DB 184. Further, the data acquisition unit 170 acquires data sensed by the various sensors during washing, and stores the data in the usage history DB 182. The scan unit 146 may be configured to capture images of both dirty and less dirty units, and correlate the images with each other.

In the process of step S 14 (determination of time for replacement), when processing to step S52 in FIG. 8, the data analysis unit 172 extracts the degree of removal of dirt and the maximal vibration in the initial status of the product and those in the current status. In step S56, the data analysis unit 172 determines whether the degree of removal of dirt has been degraded by a given number of steps, or determines whether the maximal vibration has increased over a given number. This kind of determination makes it possible to determine whether it is time for replacement taking into consideration the degradation of removal of dirt or increase in vibration (performance deterioration of the washing machine 110).

Turning back to FIG. 7, when the determination in step S16 is in the negative and the process proceeds to step S 18, the data analysis unit 172 determines whether a maintenance of parts is needed by referring to, for example, a change of the odor level. If the determination in step S18 is made in the affirmative, the data analysis unit 172 notifies the user of a message "Please clean the washing tub" as a parts maintenance message.

In contrast, if the determination in step S16 is in the affirmative, the data analysis unit 172 proceeds to step S24 through step S22, and acquires the frequency of use of each mode of the washing machine and data of the weight and the amount of discharging water. At step S28, the data analysis unit 172 selects a recommended product on the basis of determinations as to which mode is frequency used, how much the clothing is heavy in average, and how much water is discharged in average.

The determination of the recommended product may be made by considering the number of times of washing a day and the frequency of washing a week. In this case, a washing machine having a larger size than the current one may be recommended a user who frequently washes a day, or a user who does not wash frequently a week, but washes a large amount of clothing in one washing or washes multiple times on weekends and holidays. Since a washing machine having a larger capacity than the current one may have a problem about installation in the current position, a recommended washing machine may be determined by getting information about the size of the washing machine currently in use and considering the information about the size. A washing machine having a smaller capacity than the current one may be recommended a user who has many important clothes and washes multiple times while washing a small amount of clothing in one time. A washing machine of a quiet operation type having reduced vibration and generated sound may be recommended a user who is determined from the usage history DB 182 to wash at night (particularly, midnight) or early in the morning. If a product different from the washing machine is recommended, the user may be notified of the reason for recommendation together with product information.

As described above, according to the second embodiment, the data analysis unit 172 is capable of providing the user with information about the new washing machine that corresponds to the usage status of the washing machines 110 as in the case of the first embodiment previously described. It is thus feasible to provide the user with information about a washing machine suitable of the user based on the mode used highly frequently even in case of urgent replacement.

The determination of the time for replacement may be made by referring to the number of times that error has occurred (the frequency of occurrence).

The second embodiment may have a case where any part of the structure in FIG. 9 is not used to determine the replacement time and the recommended product. In this case, the part of the structure that is not used may be omitted from the washing machine 110.

(Third Embodiment) Now, a third embodiment is described. An apparatus information providing system of the third embodiment is equipped with a refrigerator 210 instead of the air-conditioner 10 in FIG. 1. The other structures are the same as those illustrated in FIG. 1.

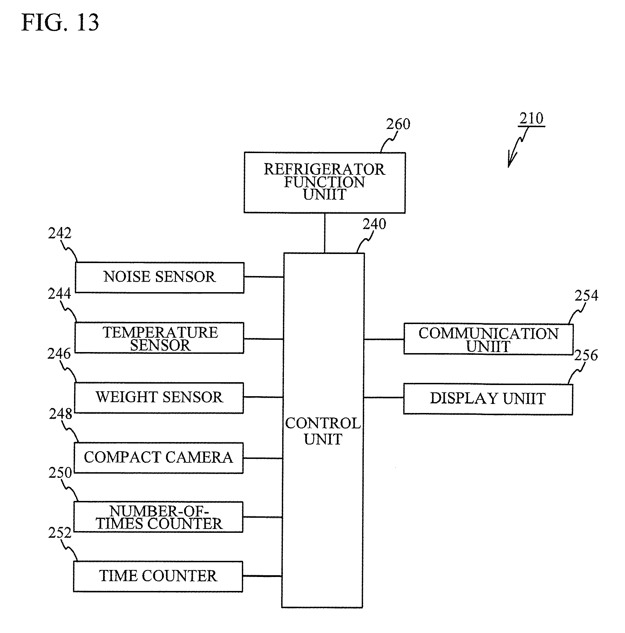

In FIG. 13, there is illustrated a block diagram of the refrigerator 210. As illustrated in FIG. 13, the refrigerator 210 is equipped with refrigerator function unit 260, a noise sensor 242, a temperature sensor 244, a weight sensor 246, a compact camera 248, a number-of-times counter 250, a time counter 252, a communication unit 254, a display unit 256, and a control unit 240.

The refrigerator function unit 260 realizes functions that the refrigerators generally have (such as a refrigerating room, freezer room, vegetable room, and chilled room) under the instructions of the control unit 240.

The noise sensor 242 is a sensor that detects noise generated by the refrigerator 210. The temperature sensor 244 is a sensor that detects the temperature inside the refrigerator 210. Multiple temperature sensors 244 may be provided for respective multiple zones in the refrigerator 210.

The weight sensor 246 includes multiple weight sensors arranged so that one or multiple weight sensors are provided for each zone (zones such as refrigerating room and the freezer room) in the refrigerator 210. The compact camera 248 captures images showing how much foods are stored in which zones in the refrigerator 210.

The number-of-times counter 250 counts the number of times that the door of each room is opened or closed. The time counter 252 measures the time it took the temperature in the refrigerator 210 that rose due to opening the door to return to the set temperature.

The communication unit 254 is similar to the communication units 54 and 156 described in the first and second embodiments. The display unit 256 is attached to the door of the refrigerator or the like.

The control unit 240 controls the parts of the refrigerator 210 in an integrated way. The control unit 240 performs the processes of FIGs. 7 and 8 in similar ways to those of the above-described first and second embodiments (it is however noted that step S10 in FIG. 7 is directed to, for example, determining whether the door of the refrigerator is opened or closed).

In this case, the control unit 240 determines whether it is time for replacement of the refrigerator 210 by referring to the magnitude of noise, the cooling capacity (time until the temperature returns to the set temperature) and the like. When the time for replacement comes, the control unit 240 provides the user of information about a recommended product on the basis of the usage history (the frequency of use of each room (the number of times of opening and closing the door)), the storage ratio of foods or the like. A recommended product may be determined taking the size of the current refrigerator into consideration.

As described above, the third embodiment is capable of providing the user with information about a new refrigerator that corresponds to the usage status of the refrigerator 210 as in the case of the first embodiment. It is thus feasible to provide the user with information suitable for the user even in case of urgent replacement of the refrigerator.

(Fourth Embodiment) Now, a fourth embodiment is described. An apparatus information providing system of the fourth embodiment is equipped with a television 310 instead of the air-conditioner in FIG. 1. The other structures in FIG. 1 are the same.

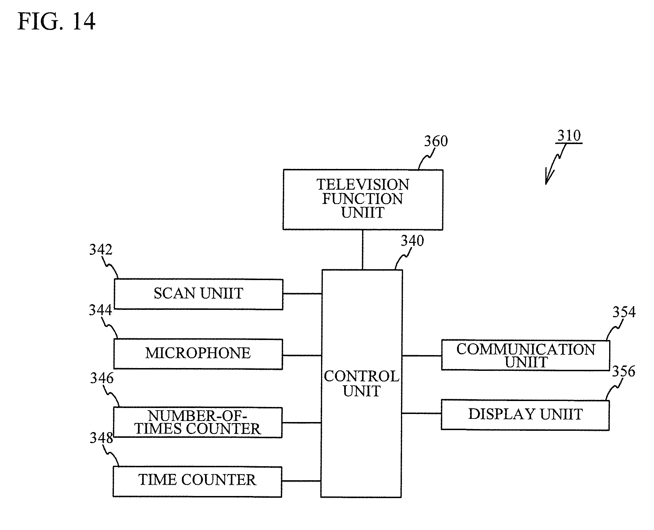

FIG. 14, there is illustrated a block diagram of the television 310. As illustrated in FIG. 14, the television 310 is equipped with a television function unit 360, a scan unit 342, a microphone 344, a number-of-times counter 346, a time counter 348, a communication unit 354, a display unit 356 and a control unit 340.

The television function unit 360 realizes functions that the refrigerators generally have (terrestrial digital, BS, CS, external input) under the instructions of the control unit 340. Further, the television function unit 360 outputs a test signal (sound) or displays a test image under the instructions of the control unit 340 when the television 310 is turned on or off.

The scan unit 342 scans the test image displayed by the television function unit 360. The microphone 344 hears the test signal output by the television function unit 360. The communication unit 354 is similar to the communication units 54, 156 and 254 of the first through third embodiments.

The number-of-times counter 346 counts the number of times that the television is used. The time counter 348 measures the time during which the television is used.

The control unit 340 controls the parts of the television 310 in an integrated way. Further, the control unit 340 obtains the difference in pixel level between the image scanned by the scan unit 342 and the text image that is the standard. Furthermore, the control unit 340 obtains a noise level from the difference between the test signal heard by the microphone 344 and the test signal that is the standard.

The control unit 340 performs the processes of FIGs. 7 and 8 in a way similar to those of the above-described first through third embodiments. In this performance, the control unit 340 determines the time for replacement of the television 310 on the basis of the difference in the noise level or the pixel level. Instead, the control unit 340 determines the time for replacement of the television 310 on the basis of the number of times of use of the television or the used time thereof. When the replacement time comes, the control unit 340 provides the user with information about a recommended product on the basis of the usage history up to now (as to whether an external input has been used frequently or whether a 3D display has been used frequently). A recommended product may be determined taking the size of the current television into consideration. It may be possible to attach a luminance meter to the television 310 and measure the luminance in the room during the time when the television is watched and to determine a recommended product of a most suitable television based on the measured luminance. The information about the coming of the replacement time and a recommended product may be displayed on the screen of the television 310 or that of the corresponding user terminal 20.

As described above, according to the fourth embodiment, the control unit 340 is capable of providing the user with information about a new television that corresponds to the usage status of the television 310 as in the case of the first through third embodiments. It is thus feasible to provide the user with information suitable for the user even in case of urgent replacement of the television.

In the above-described fourth embodiment, the scan unit 342 and the microphone 344 may be connected to the main body of the television 310 by wired or wireless connection. That is, the scan unit 342 and the microphone 344 may be fixed to the main body of the television 310 or may be attached in a position away from the main body of the television 310. The fourth embodiment may be configured to have a timer that measures the time until a program is watchable after the television 310 is turned and to determine the time for replacement of the television 310 on the basis of a change of the time measured by the timer. The time for replacement may be determined by the profile of heating.

The fourth embodiment may be applied to a camera or a video camera besides the television. For the camera, a recommended product may be specified by determining whether a lens connection process has been often used. For the video camera, a recommended product may be specified by determining whether a telephoto mode has been often used.

For the camera or video camera, the time for replacement of a battery may be determined. More specifically, the time for replacement of the battery is determined by acquiring the time needed for fully charging the battery and the time until the fully charged battery is empty by the camera or video camera and referring to these times. In some cases, the battery is charged after removal from the camera or video camera, or is reused for multiple products. In such cases, a compact memory built in the battery is used to store the time needed to fully charge the batter, the time until the fully charged battery becomes empty and the remaining capacity of the battery, and the control unit obtains the times from the above memory.

Although the above description of the first through fourth embodiments is directed to examples that are the air-conditioner, washing machine, refrigerator, television, camera, video camera and battery, the embodiments are not limited to the above examples. The apparatus information providing system may be applied to various apparatuses other than the above (cocking equipment such as personal computer, printing machine, lighting equipment and microwave oven, vehicles such as automotive, manufacturing machines of industrial products, for example). The above apparatuses may be suddenly faulty even within the useful life and durability time. Even in such a case, the apparatus information providing system 100 of the embodiments is capable of providing the user, from the past usage status, with product information suitable for the use's lifestyle (including the number of times of use, an increasing number of heat sources and an increasing number of family members) and the usage status in the factories in addition to an option of repair. The user is thus feasible to known product information suitable for him/her in case of an unexpected failure of equipment.

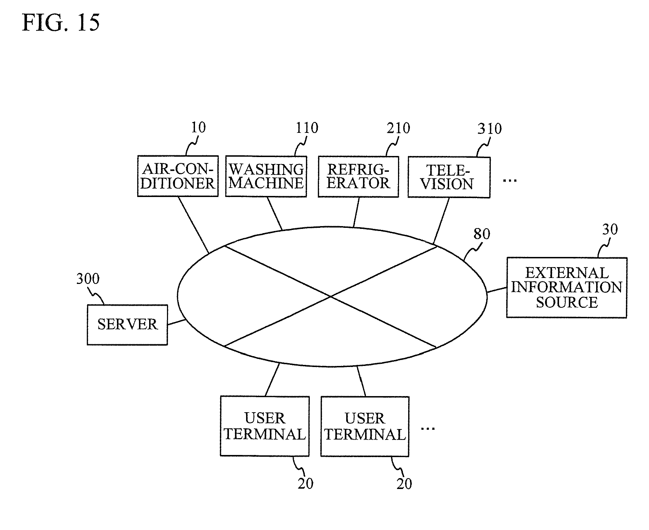

The above description of the first through fourth embodiments is directed to an exemplary case where the control parts of the apparatuses such as the air-conditioner, washing machine, refrigerator, television, camera and video camera provides information about the time for replacement and a recommended product. However, the embodiments are not limited to the above but may be configured, as illustrated in FIG. 15, to have a server 300 provided on the network 80, which server 300 determines the time for replacement of each apparatus and a recommended product and provides the display unit of each apparatus and the corresponding user terminals 20 with information thereon. The server 300 is configured to acquire the detected values of sensors of the apparatuses and determine the time for replacement of each apparatus and a recommended product in a similar way to that of each of the above-described embodiments. In this case, for example, a person is detected by the infrared camera 50 attached to the air-conditioner 10 to detect an increase or decrease of the family and provide each apparatus with information on the detection results, whereby a future usage status can be predicted in addition to the usage status up to now. Instead, the infrared camera 50 may be provided separately from the air-conditioner 10 and may be connected to the network 80. Similarly, the vibration sensor 142 may be provided separately from the washing machine 110 (in the vicinity of the washing machine 110), and may be connected to the network 80. Consequently, a sensor that was not attached to the apparatus when it was purchased may be provided in an appropriate position and may be connected to the network 80.

In the case where the server 300 is utilized as illustrated in FIG. 15, there is a case where the battery useful period of a certain apparatus after charging has no problem while another apparatus has a shorter battery useful period. In such a case, it is determined that the battery does not deteriorate but the apparatus deteriorates and that it is time for replacement of the apparatus.

The above-described embodiments are examples of suitably carrying out the invention. However, the present invention is not limited to those embodiments but may be carried out in various ways without departing from the scope of the invention.

### DESCRIPTION OF REFERENCE NUMERALS

- 10: air-conditioner
- 56: display unit
- 70: data acquisition unit
- 72: data analysis unit
- 110: washing machine
- 158: display unit
- 170: data acquisition unit
- 172: data analysis unit
- 210: refrigerator
- 256: display unit
- 310: television

## Claims

1. An electronic apparatus **characterized by** comprising:
a first acquisition unit that acquires usage status of a first apparatus that belongs to a given category; and
a second acquisition unit that acquires information about a second apparatus that belongs to the given category and is different from the first apparatus on the basis of the usage status of the first apparatus acquired by the first acquisition unit.

2. The electronic apparatus according to claim 1, **characterized in that** the first acquisition unit acquires, as the usage status of the first apparatus, information about a place in which the first apparatus is installed.

3. The electronic apparatus according to claim 2, **characterized in that** the first acquisition unit acquires, as the usage status of the first apparatus, information about a size of a place in which the first apparatus is installed.

4. The electronic apparatus according to claim 2 or 3, **characterized in that** the first acquisition unit acquires, as the usage status of the first apparatus, information about the amount of heating in the place in which the first apparatus is installed.

5. The electronic apparatus according to any one of claims 1 to 4, **characterized in that** the first acquisition unit acquires, as the usage status of the first apparatus, information about the frequency of use of the first apparatus.

6. The electronic apparatus according to any one of claims 1 to 5, **characterized in that** the first acquisition unit acquires a specification of the first apparatus.

7. The electronic apparatus according to any one of claims 1 to 6, **characterized in that** the second acquisition unit acquires a specification of the second apparatus.

8. The electronic apparatus according to any one of claims 1 to 7, **characterized in that** the second acquisition unit acquires word-of-mouth information about the second apparatus.

9. The electronic apparatus according to any one of claims 1 to 8, **characterized by** comprising a control unit that controls a timing of acquiring information about the second apparatus by the second acquisition unit.

10. The electronic apparatus according to claim 9, **characterized in that** the control unit controls the timing on the basis of a physical change of the first apparatus.

11. The electronic apparatus according to any one of claims 1 to 10, **characterized by** comprising a display unit that displays the information about the second apparatus acquired by the second acquisition unit.

12. The electronic apparatus according to any one of claims 1 to 11, **characterized in that** the electronic apparatus is built in the first apparatus.

13. The electronic apparatus according to any one of claims 1 to 12, **characterized in that** the first acquisition unit acquires a time zone in which the first apparatus is used as the usage status of the first apparatus.

14. The electronic apparatus according to any one of claims 1 to 13, **characterized by** comprising a third acquisition unit that acquires a change of a lifestyle of a user.

15. The electronic apparatus according to any one of claims 1 to 14, **characterized by** comprising a communication unit that transmits the information acquired by the second acquisition unit to an external apparatus.
